(19) **Europäisches Patentamt**

**European Patent Office**

**Office européen des brevets**

(11) Veröffentlichungsnummer: **0 505 885 A1**

(12) **EUROPÄISCHE PATENTANMELDUNG**

(21) Anmeldenummer: **92104528.2**

(22) Anmeldetag: **16.03.92**

(51) Int. Cl.5: **A61C 17/06**

(30) Priorität: **28.03.91 DE 9103865 U**

(43) Veröffentlichungstag der Anmeldung: **30.09.92 Patentblatt 92/40**

(84) Benannte Vertragsstaaten: **DE DK FR IT**

(71) Anmelder: **SIEMENS AKTIENGESELLSCHAFT**
**Wittelsbacherplatz 2**
**W-8000 München 2(DE)**

(72) Erfinder: **Sutter, Ralf, Dipl.-Ing. (FH)**
**Donarstrasse 45**
**W-6800 Mannheim(DE)**
Erfinder: **Beerstecher, Lutz, Dipl.-Ing. (FH)**
**August-Urbach-Strasse 11**
**W-6140 Bensheim 3(DE)**

(54) **Ventil zur Steuerung des Durchflusses eines mittels Unterdruck in Strömung versetzbaren Mediums.**

(57) Zur Steuerung des Saugvolumens einer zahnärztlichen Absauganlage wird ein Ventil vorgeschlagen, welches einen mit Hilfe von Unterdruck steuerbaren, vorzugsweise als Membrane ausgebildeten Schließkörper (6) enthält, der im Ventilgehäuse (1) auf der einen, dem Medium abgewandten Seite einen Steuerraum (9) begrenzt und der auf der anderen Seite mit einem ortsfesten Ventilsitz (7) so zusammenwirkt, daß er von einer den Durchflußquerschnitt schließenden in eine diesen freigebende Stellung bringbar ist. Es ist ferner ein Steuerventil (14) vorhanden, welches den Querschnitt einer den Steuerraum (9) mit dem Ventilausgang verbindenden Abzweigleitung (12) in einer ersten Schaltstellung verschließt und in einer zweiten Schaltstellung öffnet. Zur Erzielung eines kompakten und kostengünstigen Ventils wird vorgeschlagen, das Steuerventil (14) im Ventilgehäuse (1) integriert anzuordnen.

FIG 1

Die Erfindung betrifft ein Ventil zur Steuerung des Durchflusses eines mittels Unterdruck in Strömung versetzbaren Mediums, insbesondere zur Steuerung des Saugvolumens einer zahnärztlichen Absauganlage, mit einem mit Hilfe des Unterdruckes steuerbaren, vorzugsweise als Membrane ausgebildeten Schließkörper, der im Ventilgehäuse auf der einen, dem Medium abgewandten Seite einen Steuerraum begrenzt und der auf der anderen Seite mit einem ortsfesten Ventilsitz so zusammenwirkt, daß er von einer den Durchflußquerschnitt schließenden in eine diesen freigebende Stellung bringbar ist, sowie mit einem Steuerventil, welches den Querschnitt einer den Steuerraum mit dem Ventilausgang verbindenden Abzweigleitung in einer ersten Schaltstellung verschließt und in einer zweiten Schaltstellung öffnet.

Ein derartiges Ventil ist beispielsweise aus der DE-OS 20 05 567 bekannt. Das Ventil wird dort zu Steuerung des Saugluftstromes einer Sauganlage zum Absaugen von Wasser, Blut, Speichel, Zahnsubstanz, usw. aus der Mundhöhle eines Patienten eingesetzt. Bei der bekannten Ventilanordnung ist das Steuerventil als vom Durchflußventil baulich getrenntes 2-Stellungs-3-Wege-Steuerventil ausgebildet. Dieses Steuerventil kann von Hand betätigt oder mit der Ablage für einen Mundstückhalter des Saugschlauches gekoppelt werden, wobei in letzterem Fall das Steuerventil durch die Federkraft in eine Stellung gebracht wird, in der beim Abnehmen des Saugschlauches das Absperrventil geöffnet und beim Ablegen geschlossen wird.

Mit Hilfe des Steuerventils kann der Durchflußquerschnitt ganz geöffnet oder geschlossen werden, oder auch nur teilweise, so daß je nach Bedarf der Durchsatz des Mediums eingestellt und damit eine Dosierung des Saugstromes vorgenommen werden kann.

Bei einer anderen, ähnlich aufgebauten Ventilanordnung (DE-38 27 176) sind Steuer- bzw. Belüftungsventile vorgesehen, die intermittierend getaktet werden, wodurch die Saugkraft bzw. das Saugvolumen kontinuierlich gesteuert werden kann. Auch bei dieser Ventilanordnung sind die Steuerbzw. Belüftungsventile baulich vom Ventil getrennt angeordnet.

Der im Anspruch 1 angegebenen Erfindung liegt die Aufgabe zugrunde, demgegenüber eine verbesserte, insbesondere vereinfachte und kostengünstigere Lösung anzugeben, die darüber hinaus auch die Möglichkeit eröffnet, den Einsatz und die Anwendung eines solchen Ventiles gegebenenfalls noch zu erweitern.

Durch die Integration des Steuerventiles in das eigentliche Ventilgehäuse wird eine Vereinfachung der Ventilanordnung, insbesondere eine zeitsparende Montage, erzielt; das Ventil kann deutlich kompakter gestaltet werden. Ein weiterer Vorteil liegt in der relativ einfachen Nachrüstbarkeit bisheriger Ventilanordnungen mit baulich getrennten Steuerventilen, weil lediglich das obere Ventilgehäuse ausgetauscht zu werden braucht. Des weiteren besteht mit Vorteil die Möglichkeit, in das Ventilgehäuse ein Unterdruckbegrenzungsventil zu integrieren.

Weitere Vorteile ergeben sich aus der nachstehenden Beschreibung eines Ausführungsbeispiels und einer zusätzlichen Variante.

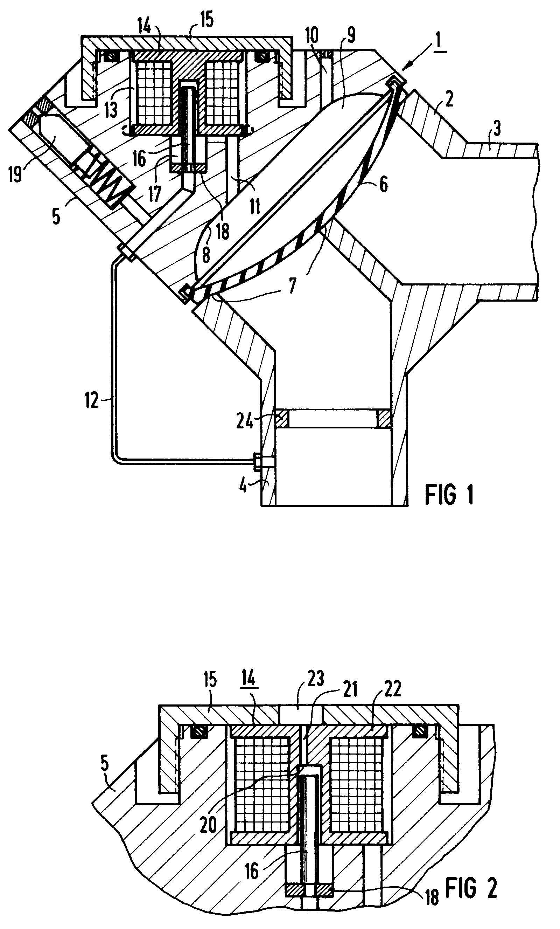

Die Figur 1 zeigt die erfindungsgemäße Ventilanordnung im Schnitt. Das mit 1 bezeichnete Ventilgehäuse wird gebildet aus zwei Hälften, einer unteren Hälfte 2, die einen Medieneinlaßstutzen 3 sowie einen Auslaßstutzen 4 enthält und einer oberen Gehäusehälfte 5, welche deckelartig auf die Oberseite der Hälfte 2 aufgesetzt und mit nicht dargestellten Verbindungselementen lösbar verbunden ist. Zwischen den beiden Hälften 2 und 5 ist eine als Schließkörper wirkende Membrane 6 angeordnet, die in der Darstellung in einer Schließstellung gezeichnet ist. In dieser Stellung liegt die Membrane auf einem Ventilsitz 7 dichtend an und verschließt so Ein- und Auslaßkanal. Die Membrane 6 begrenzt zusammen mit einer Wandung 8 der oberen Gehäusehälfte 5 einen Steuerraum 9, der einerseits über einen Entlüftungskanal 10 mit der Atmosphäre und andererseits über einen weiteren Kanal 11 mit einer Abzweigleitung 12 verbunden ist, die in den Auslaßstutzen 4 einmündet.

Im schräg verlaufenden oberen Teil der Gehäusehälfte 5 ist eine Ausnehmung 13 vorgesehen, in die ein als Steuerventil wirkendes Magnetventil 14 eingesetzt ist. Die Ausnehmung ist mittels eines Deckels 15 luftdicht verschlossen. Der Stößel 16 des Magnetventils 14 ragt in eine sich an die Ausnehmung 13 anschließende weitere, im Durchmesser etwas kleinere Ausnehmung 17, welche den Kanal 11 mit der Abzweigleitung 12 verbindet. Im unteren Teil der Ausnehmung 17 befindet sich eine Düse 18, die einen Ventilsitz bildet, gegen den der Stößel 16 in der einen Schaltstellung dichtend anliegt, während er in der anderen Schaltstellung die Ventilsitzöffnung und damit die Verbindung des Steuerraums 9 mit dem Ventilauslaßstutzen 4 freigibt.

Mit 19 ist ein Unterdruckbegrenzungsventil bezeichnet, welches bei zu hohem Unterdruck auf der Saugmaschinenseite anspricht.

Alternativ zu der Abdichtung der Ausnehmung mittels des Deckels 15 ist es denkbar, das Ventil 14 direkt mittels geeigneter, nicht näher bezeichneter Dichtringe in der Ausnehmung 13 gegenüber Atmosphäre dichtend zu haltern, wie dies in Fig. 1 gestrichelt angedeutet ist.

Das Magnetventil 14 wird in bekannter Weise bei Entnahme, z.B. eines Saugschlauches, aus der hierfür vorgesehenen Ablageeinrichtung aktiviert.

Dabei wird über einen Sensor, z.B. über eine Lichtschranke, das Ventil elektrisch geschaltet. Der Stößel 16 wird dabei vom Ventilsitz der Düse 18 angehoben. Dadurch wird eine direkte Verbindung zwischen der Steuerkammer 9 und dem Auslaßstutzen 4, also mit der Leitung, die zum Unterdruckerzeuger führt, hergestellt. Durch den in der Steuerkammer 9 abfallenden Druck wird die Membrane 6, die im spannungslosen Zustand der Spule die Verbindung zwischen Ein- und Auslaß verschließt, angehoben.

Vorteilhafterweise wird das Magnetventil mit Hilfe eines Taktgebers mit einer Frequenz von zwischen 0,5 und 50 Hz intermittierend angesteuert, d.h. die Spule des Ventils wird mit der angegebenen Frequenz, die vorzugsweise bei 20 Hz liegt, elektrisch angesteuert. Um verschiedene Membranstellungen und damit Saugvolumina zu erreichen, wird vorteilhafterweise das Tastverhältnis modifiziert. Der Stößel wird so mehr oder weniger lange von seinem Ventilsitz abgehoben und der Druck im oberen Ventilraum, der hier zwangsbelüftet ist, verändert. Die Membrane 6 öffnet sich dabei nur so weit, bis sich ein Kräftegleichgewicht zwischen dem Steuerraum 9 und dem unteren Ventilraum eingestellt hat. Je nach Taktverhältnis stellen sich infolge der Trägheit der Membrane unterschiedliche Zwischenstellungen ein. Nach Abschalten des Steuerventils durch Ablegen des Saugschlauches wird die Spule des Magnetventils 14 spannungslos. Über die Zwangsbelüftung mittels des Entlüftungskanals 10, der mit der Atmosphäre verbunden ist, steigt zunächst der Druck im oberen Ventilraum, wodurch die Membrane nach unten in die gezeigte Schließstellung gedrückt wird. Der Stößel 16 des Magnetventils 14 fällt im spannungslosen Zustand wieder dichtend auf den Ventilsitz der Düse 18 auf. Der wirksame Querschnitt des Entlüftungskanals 10 kann auf den Düsenquerschnitt am Ventilsitz der Düse 18 so abgestimmt sein, daß zusätzlich zu dem Tastverhältnis, mit dem die Spule angesteuert wird, Einfluß auf die Kennlinie des Durchflußventils genommen werden kann.

Die Figur 2 zeigt eine Variante, bei der der Stößel 16 des Magnetventils 14 so angeordnet ist, daß er im nicht aktivierten Zustand, wie vorbeschrieben, auf dem Ventilsitz der Düse 18 anliegt, dagegen im aktivierten Zustand, also wenn er diesen Ventilsitz freigibt, die Öffnung 20 eines Entlüftungskanals 21, die im Spulenkörper 22 des Magnetventiles vorgesehen ist, verschließt. Der Entlüftungskanal 21 kann zusätzlich oder anstelle des vorbeschriebenen Entlüftungskanals 10 vorgesehen sein. Bei dieser Variante ist der Deckel 15 mit einer mit dem Entlüftungskanal 21 korrespondierenden Austrittsöffnung 23 versehen. Die beschriebene Variante hat den Vorteil, daß keine Strömungsverluste auftreten.

Um den durch die Zwangsentlüftung über den Entlüftungskanal 10 gegebenen Druckverlust auszugleichen, ist vorteilhafterweise in die Leitungskanal des Auslaßstutzens 4 eine Drosselstelle in Form eines querschnittsverendenden Ringes 24 vorgesehen (Fig. 1). Anstelle des Ringes 24 ist es denkbar, in den Auslaßkanal 4 ein Venturirohr einzusetzen oder den Gehäusestutzen 4 bereits in Form eines Venturirohres auszubilden.

**Patentansprüche**

1. Ventil zur Steuerung des Durchflusses eines mittels Unterdruck in Strömung versetzbaren Mediums, insbesondere zur Steuerung des Saugvolumens einer zahnärztlichen Absauganlage, mit einem mit Hilfe des Unterdruckes steuerbaren, vorzugsweise als Membrane ausgebildeten Schließkörper (6), der im Ventilgehäuse (1) auf der einen, dem Medium abgewandten Seite einen Steuerraum (9) begrenzt und der auf der anderen Seite mit einem ortsfesten Ventilsitz (7) so zusammenwirkt, daß er von einer den Durchflußquerschnitt schließenden in eine diesen freigebende Stellung bringbar ist, sowie mit einem Steuerventil (14), welches den Querschnitt einer den Steuerraum (9) mit dem Ventilausgang verbindenden Abzweigleitung (12) in einer ersten Schaltstellung verschließt und in einer zweiten Schaltstellung öffnet, **dadurch gekennzeichnet,** daß das Steuerventil (14) im Ventilgehäuse (1) integriert angeordnet ist.

2. Ventil nach Anspruch 1, **dadurch gekennzeichnet**, daß das Steuerventil (14) in einer Ausnehmung (13) des Ventilgehäuses (1) angeordnet ist.

3. Ventil nach Anspruch 2, **dadurch gekennzeichnet,** daß das Ventilgehäuse (1) aus zwei Hälften (2, 5) besteht, einer den Ventileingang und Ventilausgang enthaltenden ersten Gehäusehälfte (2) und einen das Steuerventil (14) aufnehmenden und einen Teil des Steuerraumes (9) begrenzenden zweiten Gehäusehälfte (5).

4. Ventil nach Anspruch 3, **dadurch gekennzeichnet,** daß in der zweiten Gehäusehälfte (5) ein mit dem Steuerraum (9) und mit der Atmosphäre in Verbindung stehender Entlüftungskanal (10) vorgesehen ist.

5. Ventil nach Anspruch 2, **dadurch gekennzeichnet,** daß als Steuerventil ein in die Ausnehmung (13) einsetzbares Elektromagnetventil (14) vorgesehen ist, dessen Spulenkörper (22) und Spule im eingesetzten Zustand in eine erste Ausnehmung (13) und dessen Stößel (16) in eine daran angrenzende zweite Ausnehmung (17) zu liegen kommen, wobei letztere Ausnehmung (17) die Abzweigleitung (12) über einen Leitungskanal (11) mit dem Steuerraum (9) verbindet.

6. Ventil nach Anspruch 5, **dadurch gekennzeichnet**, daß die das Steuerventil (14) aufnehmende Ausnehmung (13) von einem abnehmbaren Deckel (15) verschlossen ist.

7. Ventil nach Anspruch 5, **dadurch gekennzeichnet**, daß das Steuerventil (14) mittels geeigneter Dichtungsmittel in der Ausnehmung (13) gehaltert ist.

8. Ventil nach einem der Ansprüche 2 bis 7, **dadurch gekennzeichnet**, daß das Steuerventil (14) selbst einen Entlüftungskanal (21) aufweist, der mit der Atmosphäre in Verbindung steht.

9. Ventil nach Anspruch 8, **dadurch gekennzeichnet,** daß der Ventilstößel (16) des Steuerventils (14) in der Ausnehmung (13) so angeordnet ist, daß er den Entlüftungskanal (21) bei geöffnetem Ventil geschlossen und bei geschlossenem Ventil offen hält.

10. Ventil nach einem der Ansprüche 1 bis 9, **dadurch gekennzeichnet**, daß das Steuerventil (14) mit Hilfe eines Taktgebers mit einer Frequenz zwischen 0,5 und 50 Hz intermittierend angesteuert wird.

11. Ventil nach einem der Ansprüche 1 bis 10, **dadurch gekennzeichnet,** daß im Ventilgehäuse (1) ein Unterdruckbegrenzungsventil (19) angeordnet ist.

FIG 1

FIG 2

Europäisches
Patentamt

# EUROPÄISCHER RECHERCHENBERICHT

Nummer der Anmeldung

EP 92 10 4528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-2 037 197 (KALTENBACH & VOIGT) --- | 1 | A 61 C 17/06 |
| A | DE-A-2 037 197 * Ansprüche 1,3,4; Abbildung 2 * --- | 2,3,8,9 | |
| A | US-A-3 763 862 (SPIETH) * Spalte 10, Zeile 60 - Spalte 12, Zeile 5; Abbildungen 5-10 * --- | 1 | |
| A | US-A-3 636 974 (BEGUIRISTAIN) * Anspruch 1; Abbildung 2 * --- | 1 | |
| A | EP-A-0 355 467 (SIEMENS AG) * Ansprüche 1,2,6 * ----- | 1,10 | |

| RECHERCHIERTE SACHGEBIETE (Int. Cl.5) |
|---|
| A 61 C |

Der vorliegende Recherchenbericht wurde für alle Patentansprüche erstellt

| Recherchenort | Abschlußdatum der Recherche | Prüfer |
|---|---|---|
| BERLIN | 02-07-1992 | KANAL P K |

EPO FORM 1503 03.82 (P0403)